# EUROPEAN PATENT APPLICATION

(11) **EP 2 043 184 A1**
(43) Date of publication of application: **01.04.2009**
(21) Application number: 07742568.4
(22) Date of filing: 20.04.2007
(51) Int. Cl.: H01M 8/04

(54) **FUEL CELL SYSTEM**

(30) Priority: 02.05.2006 JP 2006128216
(71) Applicant: Nissan Motor Co., Ltd., Kanagawa 221-0023 (JP)
(72) Inventor: YAMASHITA, Toshihiro, Kanagawa 243-0123 (JP); ISHIKAWA Takayuki, Kanagawa 243-0123 (JP); MORITA Michiko, Kanagawa 243-0123 (JP); GOTO Kenichi, Kanagawa 243-0123 (JP); Taniguchi Ikuhiro, Kanagawa 243-0123 (JP); YONEKURA Kenji, Kanagawa 243-0123 (JP); CHIKUGO Hayato, Kanagawa 243-0123 (JP)
(74) Representative: Grünecker, Kinkeldey, Stockmair & Schwanhäusser Anwaltssozietät
(86) International application number: PCT/JP2007/059133
(87) International publication number: WO 2007/129602

(57) **Abstract**

A fuel cell system according to this invention comprises: a pressurizing valve (2a) provided on a cooling water circulation path; a reservoir tank (5) into which the cooling water flows through a pipe (4) when the pressurizing valve (2a) is open; an air supply pipe (13) that is connected to the reservoir tank (5) to supply air for diluting a fuel gas when the fuel gas accumulates in the reservoir tank (5); and a diluted gas exhaust pipe (15) for discharging the diluted fuel gas from the reservoir tank (5).

## Description

### TECHNICAL FIELD

This invention relates to a fuel cell system, and more particularly to a fuel cell system in which, when a minute amount of hydrogen gas leaks, the hydrogen gas is diluted below a combustible concentration region and discharged to the exterior of the fuel cell system.

### BACKGROUND ART

In a fuel cell, an electrolyte membrane is gripped between a fuel electrode and an oxidant electrode, and power generation is performed by supplying a fuel gas to the fuel electrode and an oxidant gas to the oxidant electrode. In an automobile application, for example, a solid polymer electrolyte membrane having hydrogen ion conductivity is often used as the electrolyte membrane. Further, when hydrogen and air are supplied to the fuel cell as the fuel gas and the oxidant gas, respectively, a reaction such as the following occurs.

Fuel electrode: 2*H*₂ → 4*H*⁺ + 4*e*⁻ (1)

Oxidant electrode: *O*₂ + 4*H*⁺ + 4*e*⁻ → 2*H*₂*O* (2)

Hence, the fuel cell discharges only water as a by-product, and is therefore advantaged in that it does not discharge substances which cause damage to the global environment, such as carbon dioxide that is discharged from an internal combustion engine.

In a heat exchange system for a fuel cell disclosed in JP2001-250570A, published by the Japan Patent Office in 2001, hydrogen leakage into a cooling water passage is detected by hydrogen leak sensors provided respectively in a radiator (heat exchanger) that supplies cooling water to the fuel cell and a reservoir tank to which the cooling water is discharged following an increase in the pressure of the cooling water passage.

### DISCLOSURE OF THE INVENTION

However, in the heat exchange system for a fuel cell disclosed in JP2001-250570A, a pressurizing cap is provided on the radiator, and therefore, if a minute amount of hydrogen flows into the cooling water from a power generation portion of the fuel cell due to a defect in the fuel cell, temporal deterioration of a sealing member, and so on, the hydrogen may flow into the reservoir tank together with the cooling water when the pressurizing cap opens due to an increase in the internal pressure of the cooling water passage. Hence, every time the pressurizing cap opens, a warning lamp is illuminated or the vehicle is halted as a failsafe (to ensure safety).

This invention has been designed in consideration of such problems, and it is an object thereof to provide a fuel cell system which is capable of preventing frequent illumination of a warning lamp and frequent failsafe vehicle stoppages, even when hydrogen flows into a reservoir tank together with cooling water.

A fuel cell system according to this invention comprises: a fuel cell that performs power generation by causing a fuel gas and an oxidant gas in air to react; a heat exchanger that supplies a cooling water to the fuel cell via a cooling water supply pipe; a pump provided in the cooling water supply pipe; a cooling water return pipe for returning the cooling water to the heat exchanger from the fuel cell; a pressurizing valve provided on a circulation path of the cooling water; a reservoir tank into which the cooling water flows through a pipe when the pressurizing valve is open; an air supply pipe that is connected to the reservoir tank to supply air for diluting the fuel gas when the fuel gas accumulates in the reservoir tank; and a diluted gas exhaust pipe for discharging the diluted fuel gas from the reservoir tank.

The fuel cell system according to this invention comprises the air supply pipe that supplies air for diluting the fuel gas (hydrogen gas) that has accumulated in the reservoir tank, and the diluted gas exhaust pipe for discharging the diluted fuel gas from the reservoir tank, and therefore, even if a minute amount of fuel gas is discharged when the pressurizing valve provided on the cooling water circulation path opens, the fuel gas can be diluted below a combustible concentration region. Consequently, frequent illumination of a warning lamp and frequent failsafe vehicle stoppages can be prevented.

### BRIEF DESCRIPTION OF THE DRAWINGS

FIG. 1 is a block diagram showing the constitution of a fuel cell system according to a first embodiment of this invention.
FIG. 2 is a block diagram showing the constitution of a fuel cell system according to a second embodiment of this invention.
FIG. 3 is a block diagram showing the constitution of a fuel cell system according to a third embodiment of this invention.
FIG. 4 is a block diagram showing the constitution of a fuel cell system according to a fourth embodiment of this invention.
FIG. 5 is a block diagram showing the constitution of a fuel cell system according to a fifth embodiment of this invention.
FIG. 6 is a block diagram showing the constitution of a fuel cell system according to a sixth embodiment of this invention.
FIG. 7 is a block diagram showing the constitution of a fuel cell system according to a seventh embodiment of this invention.
FIG. 8 is a block diagram showing the constitution of a fuel cell system according to an eighth embodiment of this invention.
FIG. 9 is a block diagram showing the constitution of a fuel cell system according to a ninth embodiment of this invention.
FIG. 10 is a block diagram showing the constitution of a fuel cell system according to a tenth embodiment of this invention.
FIG. 11 is a block diagram showing the constitution of a fuel cell system according to an eleventh embodiment of this invention.

### BEST MODES FOR CARRYING OUT THE INVENTION

### (First Embodiment)

A fuel cell system according to a first embodiment of this invention will be described below with reference to the figures.

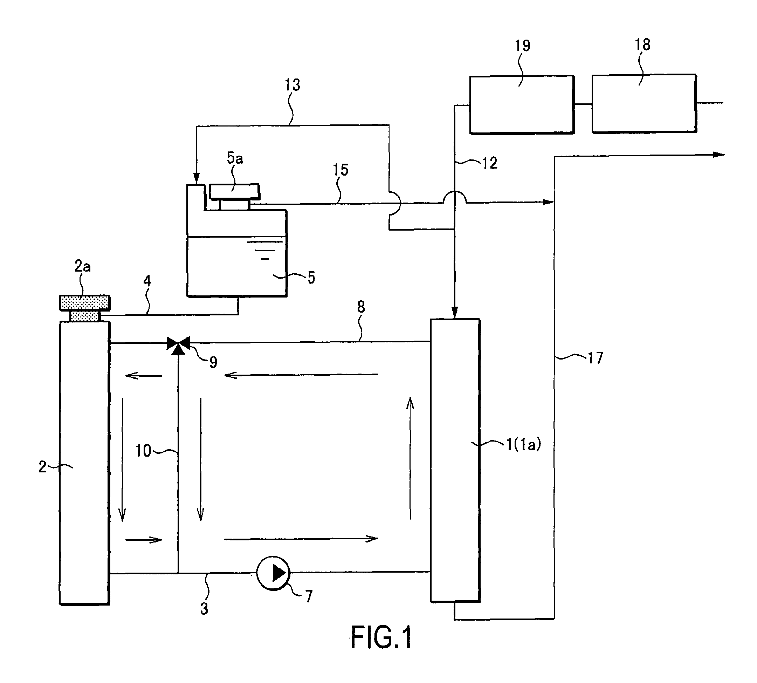

FIG. 1 is a block diagram showing the constitution of a fuel cell system according to a first embodiment of this invention. The fuel cell system according to the first embodiment is installed in a fuel cell automobile, for example.

The fuel cell system according to the first embodiment comprises a fuel cell 1 and a radiator (heat exchanger) 2. The fuel cell 1 is constituted by approximately 100 to 200 stacked unit cells (not shown), each of which is formed by sandwiching a solid polymer electrolyte membrane (not shown), for example, between two catalyst electrode layers or the like, and performs power generation by causing a fuel gas such as hydrogen to react with an oxidant gas such as oxygen in air. It should be noted that the part of the fuel cell 1 in which the electrolyte membrane is sandwiched between the two catalyst electrode layers or the like is typically referred to as a membrane electrode assembly (MEA). The fuel cell 1 is housed in a fuel cell case 1a.

The radiator 2 supplies cooling water to the fuel cell 1 via a cooling water supply pipe 3, and includes a pressurizing cap (pressurizing valve) 2a on an upstream side (the upper side of FIG. 1) thereof, for example. The pressurizing cap 2a opens when the radiator 2 reaches a high pressure equal to or greater than a predetermined pressure, as a result of which the cooling water is sent from the radiator 2 to a reservoir tank 5 (to be described below) through a pipe 4. The position of the pressurizing cap 2a or other pressurizing valve is not limited to the upstream side of the radiator 2, and the pressurizing cap 2a or other pressurizing valve may be provided in any position on a cooling water circulation path including the fuel cell 1, the radiator 2, the cooling water supply pipe 3, a cooling water return pipe 8 (to be described below), and so on.

In the radiator 2, the pressure of the cooling water is raised to increase a differential pressure with outside air, and cooling efficiency is improved by employing a fan (not shown) or the like to cool the cooling water that has been raised in temperature by the fuel cell 1, for example. A negative pressure valve may be provided in the radiator 2 to return the cooling water to the radiator 2 from the reservoir tank 5 when the pressure of the radiator 2 falls to or below a predetermined value.

A pump 7 that circulates the cooling water between the fuel cell 1 and the radiator 2 is provided in the cooling water supply pipe 3. Further, the fuel cell system according to this embodiment includes the cooling water return pipe 8 for returning the cooling water to the radiator 2 from the fuel cell 1, and a three-way valve 9 is provided in the cooling water return pipe 8. On the basis of a detection signal from a temperature sensor (not shown in FIG. 1), for example, the three-way valve 9 switches between sending cooling water from the fuel cell 1 to the radiator 2 and sending the cooling water to the cooling water supply pipe 3 via a pipe 10 connected to the cooling water supply pipe 3.

When the temperature of the cooling water flowing through the fuel cell 1 is low, the three-way valve 9 supplies the cooling water to the cooling water supply pipe 3 side, whereby the cooling water flows to the pump 7, the fuel cell 1, and the three-way valve 9 in succession. This operation is performed to warm the fuel cell 1 when the outside air temperature is low, for example. When the temperature of the cooling water flowing through the fuel cell 1 rises, the three-way valve 9 supplies the cooling water to the radiator 2 side, whereby the cooling water flows to the pump 7, the fuel cell 1, the three-way valve 9, and the radiator 2 in succession. Thus, the cooling water cools the fuel cell 1, and cooling water that has been raised in temperature by the fuel cell 1 is cooled in the radiator 2. It should be noted that the three-way valve 9 does not necessarily have to be provided.

During circulation of the cooling water on the paths described above, a minute amount of the fuel gas may flow into the cooling water from the fuel cell 1 due to temporal deterioration of the fuel cell or the like, and accumulate in an upper portion of the radiator 2. The fuel gas that accumulates in the radiator 2 is pushed out into the reservoir tank 5 together with the cooling water when the radiator 2 increases in pressure such that the pressurizing cap 2a opens. The reservoir tank 5 stores surplus cooling water, but minute amounts of fuel gas that leak into the cooling water are also stored in the reservoir tank 5, leading to an increase in the fuel gas (hydrogen) concentration of the reservoir tank 5.

To prevent such increases in the fuel gas concentration of the reservoir tank 5 in this embodiment, air is supplied to the reservoir tank 5 to dilute the fuel gas stored therein. To achieve this, air for diluting the fuel gas is supplied to the reservoir tank 5 through an air supply pipe 13. In this embodiment, the air supply pipe 13 is constituted by a branch pipe that bifurcates from an oxidant gas supply pipe 12 for supplying oxidant gas (air in this embodiment) to the fuel cell 1 in order to supply air to the reservoir tank 5. The diluted fuel gas is discharged through a diluted gas exhaust pipe 15 which is connected to a cap 5a provided on the reservoir tank 5, for example. In this embodiment, the diluted gas exhaust pipe 15 is connected to an exhaust pipe 17 for discharging unused gas (air or the like) discharged from the fuel cell 1, and therefore the diluted fuel gas is ultimately discharged to the exterior of the fuel cell system through the exhaust pipe 17. When diluting the fuel gas in the reservoir tank 5, the fuel gas is preferably diluted below a combustible concentration region.

In this embodiment, the diluted gas exhaust pipe 15 is also used as a water discharge pipe (drain pipe) of the reservoir tank 5. Further, to prevent cooling water from flowing into the air supply pipe 13 when the water level of the reservoir tank 5 rises, the position in which the air supply pipe 13 is connected to the reservoir tank 5 is set above (on a vertical direction upper side of) the position in which the diluted gas exhaust pipe 15 is connected to the reservoir tank 5. Measures may be taken to ensure that the air supply pipe 13 is itself formed above the diluted gas exhaust pipe 15.

Further, to prevent blockages and so on of filters (not shown) provided in the fuel cell 1 and radiator 2, an air filter 18 is provided on an upstream side of the oxidant gas supply pipe 12. A foreign matter removal filter or the like may be provided instead of the air filter 18. Further, an intake air compressor 19 for supplying the oxidant gas (air) to the fuel cell 1 and the reservoir tank 5 is provided on a downstream side of the air filter 18 in the oxidant gas supply pipe 12. As a result, purified air is supplied to the fuel cell 1 and the reservoir tank 5.

In this embodiment, the air supply pipe 13 which supplies air for diluting a minute amount of fuel gas (hydrogen gas) that has accumulated in the reservoir tank 5, and the diluted gas exhaust pipe 15 for discharging the diluted fuel gas from the reservoir tank 5 are provided, and therefore the fuel gas that is discharged when the pressurizing cap 2a provided on the radiator 2 is opened can be diluted below a combustible concentration region. Consequently, frequent illumination of a warning lamp and frequent failsafe vehicle stoppages can be prevented.

### (Second Embodiment)

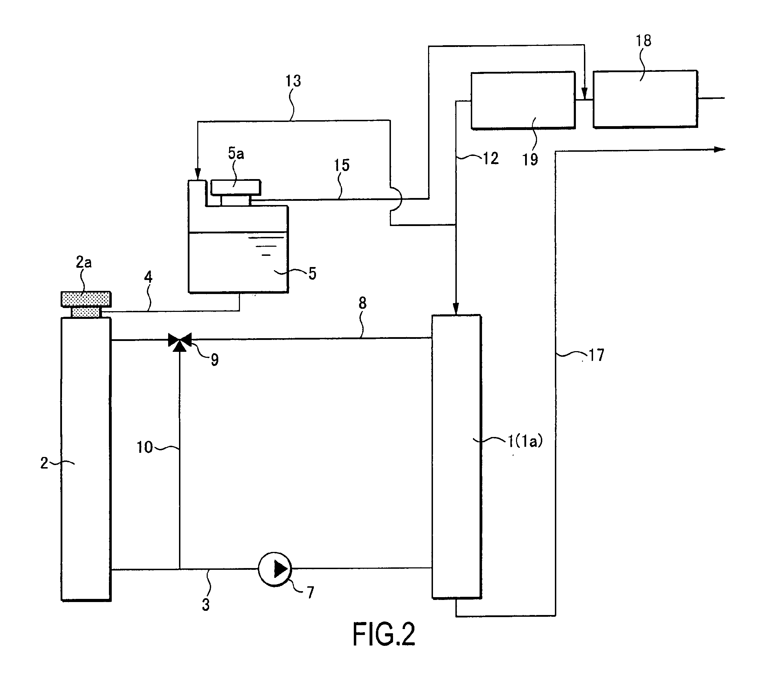

FIG. 2 is a block diagram showing the constitution of a fuel cell system according to a second embodiment of this invention. Apart from the points to be described below, the fuel cell system according to the second embodiment is identical to the fuel cell system according to the first embodiment, and identical reference symbols have been allocated to identical constitutional elements.

In the fuel cell system according to the second embodiment, one end portion of the diluted gas exhaust pipe 15 is connected to the cap 5a of the reservoir tank 5, and another end portion is connected to the oxidant gas supply pipe 12. It should be noted that in this embodiment, the oxidant gas exhaust pipe 15 is assumed to be connected between the air filter 18 and the intake air compressor 19 of the oxidant gas supply pipe 12. Hence, diluted fuel gas can be discharged from the reservoir tank 5 efficiently by negative pressure generated in the intake air compressor 19.

All other effects are similar to those of the fuel cell system according to the first embodiment.

### (Third Embodiment)

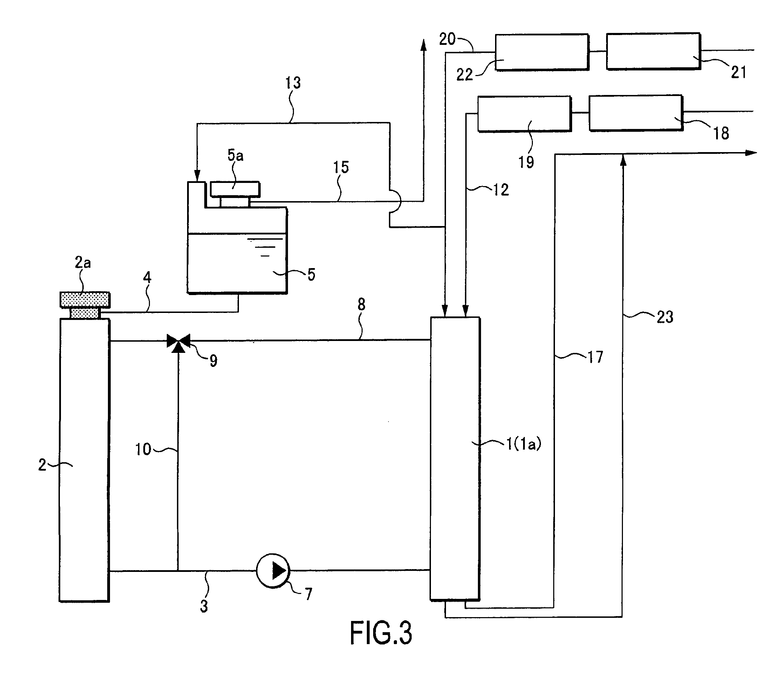

FIG. 3 is a block diagram showing the constitution of a fuel cell system according to a third embodiment of this invention. Apart from the points to be described below, the fuel cell system according to the third embodiment is identical to the fuel cell system according to the first embodiment, and identical reference symbols have been allocated to identical constitutional elements.

In the fuel cell system according to the third embodiment, a ventilation gas supply pipe 20 that supplies a ventilation gas to the fuel cell case 1a housing the fuel cell 1 is provided in addition to the oxidant gas supply pipe 12 for supplying the oxidant gas to the fuel cell 1. The ventilation gas supply pipe 20 is connected to the fuel cell case 1a, and the interior of the fuel cell case 1a is ventilated by the ventilation gas (air in this embodiment) supplied from the ventilation gas supply pipe 20.

A ventilation blower 22 that supplies the ventilation gas to an air filter 21 and the fuel cell case 1a is provided in the ventilation gas supply pipe 20. In this embodiment, it is assumed that the air filter 21 is provided further toward the upstream side of the ventilation gas supply pipe 20 than the ventilation blower 22. Further, a ventilation gas exhaust pipe 23 for discharging the ventilation gas from the fuel cell case 1a is connected to the fuel cell case 1a, and the ventilation gas exhaust pipe 23 converges with the exhaust pipe 17 on a downstream side. The air filter 21 provided in the ventilation gas supply pipe 20 purifies the ventilation gas, but does not necessarily have to be provided. Further, the ventilation gas exhaust pipe 23 does not have to converge with the exhaust pipe 17, and instead, the ventilation gas and unused gas discharged from the fuel cell 1 may be discharged to the exterior of the fuel cell system separately.

In this embodiment, the air supply pipe 13 is constituted by a branch pipe that bifurcates from the ventilation gas supply pipe 20 for supplying the ventilation gas to the fuel cell case 1a, rather than the oxidant gas supply pipe 12, in order to supply air to the reservoir tank 5. Hence, fuel gas accumulated in the reservoir tank 5 can be diluted in a similar manner to the first embodiment.

Further, in this embodiment, one end portion of the diluted gas exhaust pipe 15 is connected to the cap 5a of the reservoir tank 5, and the other end portion is open to the atmosphere. When the fuel cell system according to this embodiment is installed in a fuel cell automobile, for example, the other end portion to the end portion connected to the cap 5a of the reservoir tank 5 opens onto a motor room or the like of the fuel cell automobile. It should be noted that the one end portion of the diluted gas exhaust pipe 15 may be connected to a main body of the reservoir tank 5 rather than the cap 5a of the reservoir tank 5.

In this embodiment, the ventilation gas supply pipe 20 is provided to supply ventilation gas to the fuel cell case 1a, and therefore the interior of the fuel cell case 1a can be ventilated. Further, the one end portion of the diluted gas exhaust pipe 15 is connected to the reservoir tank 5 while the other end portion opens onto the atmosphere, and therefore the system constitution can be simplified.

All other effects are similar to those of the fuel cell system according to the first embodiment.

### (Fourth Embodiment)

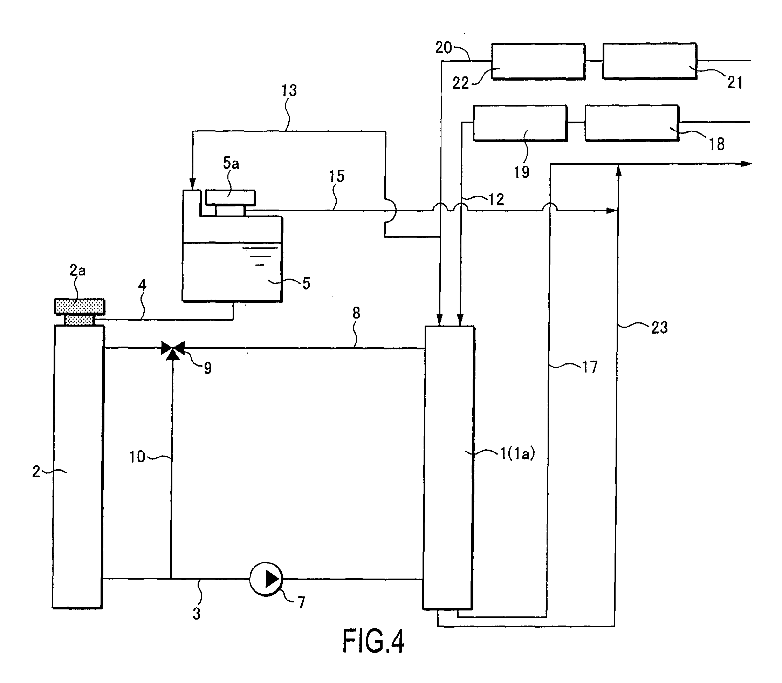

FIG. 4 is a block diagram showing the constitution of a fuel cell system according to a fourth embodiment of this invention. Apart from the points to be described below, the fuel cell system according to the fourth embodiment is identical to the fuel cell system according to the third embodiment, and identical reference symbols have been allocated to identical constitutional elements.

In the fuel cell system according to the fourth embodiment, one end portion of the diluted gas exhaust pipe 15 is connected to the cap 5a of the reservoir tank 5, and the other end portion is connected to the ventilation gas exhaust pipe 23. Thus, the diluted fuel gas can be discharged from the reservoir tank 5 efficiently by negative pressure generated in the ventilation gas flowing through the ventilation gas exhaust pipe 23.

All other effects are similar to those of the fuel cell system according to the third embodiment.

### (Fifth Embodiment)

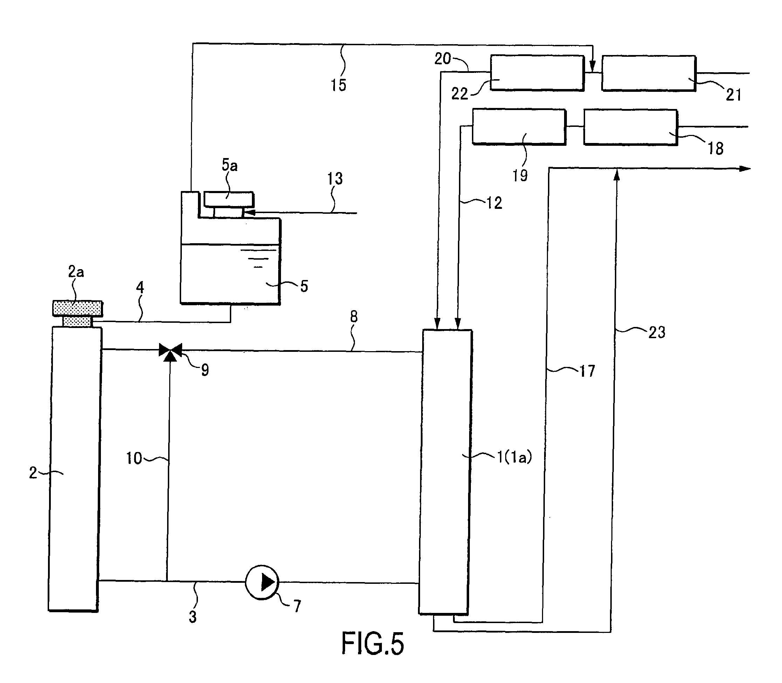

FIG. 5 is a block diagram showing the constitution of a fuel cell system according to a fifth embodiment of this invention. Apart from the points to be described below, the fuel cell system according to the fifth embodiment is identical to the fuel cell system according to the third embodiment, and identical reference symbols have been allocated to identical constitutional elements.

In the fuel cell system according to the fifth embodiment, one end portion of the air supply pipe 13 is connected to the cap 5a of the reservoir tank 5, and the other end portion is open to the atmosphere. When the fuel cell system according to this embodiment is installed in a fuel cell automobile, for example, the other end portion to the end portion connected to the cap 5a of the reservoir tank 5 opens onto a motor room or the like of the fuel cell automobile. It should be noted that the one end portion of the air supply pipe 13 may be connected to the main body of the reservoir tank 5 rather than the cap 5a of the reservoir tank 5.

Also in this embodiment, one end portion of the diluted gas exhaust pipe 15 is connected to the reservoir tank 5, and the other end portion is connected to the ventilation gas supply pipe 20. It should be noted that in this embodiment, the diluted gas exhaust pipe 15 is assumed to be connected between the air filter 21 and the ventilation blower 22 of the ventilation gas supply pipe 20. Hence, air can be taken into the reservoir tank 5 from the air supply pipe 13 efficiently by negative pressure generated by the ventilation blower 22.

Also in this embodiment, the position in which the diluted gas exhaust pipe 15 is connected to the reservoir tank 5 is set above (on a vertical direction upper side of) the position in which the air supply pipe 13 is connected to the reservoir tank 5 to prevent cooling water from flowing into the diluted gas exhaust pipe 15 and the ventilation gas supply pipe 20 when the water level of the reservoir tank 5 rises.

All other effects are similar to those of the fuel cell system according to the third embodiment.

### (Sixth Embodiment)

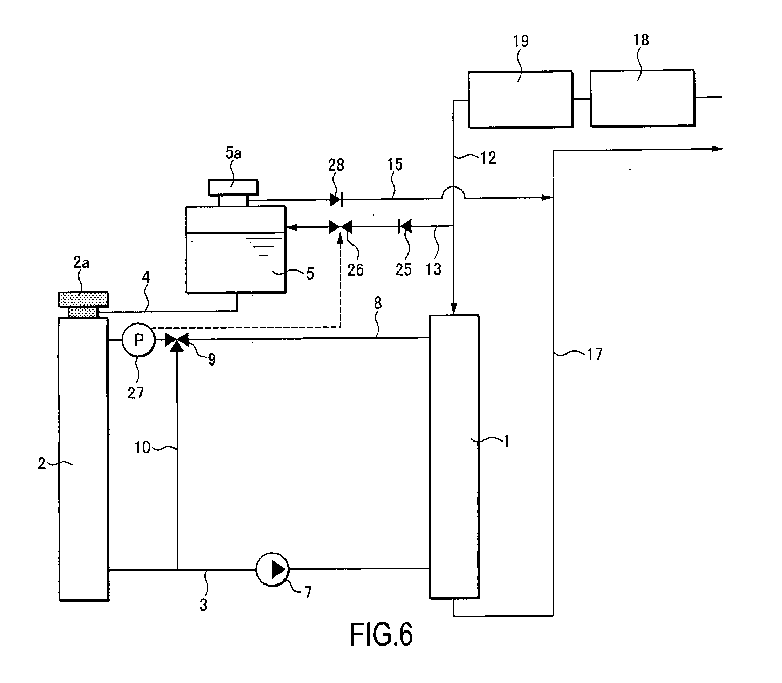

FIG. 6 is a block diagram showing the constitution of a fuel cell system according to a sixth embodiment of this invention. Apart from the points to be described below, the fuel cell system according to the sixth embodiment is identical to the fuel cell system according to the first embodiment, and identical reference symbols have been allocated to identical constitutional elements.

In the fuel cell system according to the sixth embodiment, to improve the layout freedom of the reservoir tank 5 and the diluted gas exhaust pipe 15, the position in which the air supply pipe 13 is connected to the reservoir tank 5 is set below (on the vertical direction lower side of) the position in which the diluted gas exhaust pipe 15 is connected to the reservoir tank 5, and a check valve 25 is provided in the air supply pipe 13 to prevent the cooling water from flowing into the oxidant gas supply pipe 12 and so on.

Also in this embodiment, to reduce the power consumption of the intake air compressor 19, an open/close valve 26 is provided in the air supply pipe 13 such that the fuel gas in the reservoir tank 5 is diluted only when the fuel gas concentration of the reservoir tank 5 needs to be reduced. As shown in FIG. 6, a pressure sensor 27 that detects the internal pressure of the cooling water return pipe 8 is provided in the cooling water return pipe 8, and when the internal pressure of the cooling water return pipe 8 reaches or exceeds a predetermined value, or in other words when the pressurizing cap 2a opens such that cooling water and fuel gas flow into the reservoir tank 5, the open/close valve 26 opens. When the open/close valve 26 is open, air flows into the reservoir tank 5 from the air supply pipe 13 and dilutes the minute amount of fuel gas. Thus, fuel gas leakage can be prevented similarly when a user of the fuel cell system opens the cap 5a of the reservoir tank 5, for example. It should be noted that a pressure sensor may be provided in the cooling water supply pipe 3 such that the open/close valve 26 opens when the internal pressure of the cooling water supply pipe 3 reaches or exceeds a predetermined value.

Also in this embodiment, a check valve 28 is provided in the diluted gas exhaust pipe 15 to prevent air containing fuel gas from being caused to flow into the reservoir tank 5 from the exhaust pipe 17 via the diluted gas exhaust pipe 15 by negative pressure generated in the reservoir tank 5 when the cooling water in the reservoir tank 5 is suctioned back to the radiator 2 side while the open/close valve 26 is closed, and thus air containing fuel gas is prevented from flowing into the reservoir tank 5.

All other effects are similar to those of the fuel cell system according to the first embodiment.

### (Seventh Embodiment)

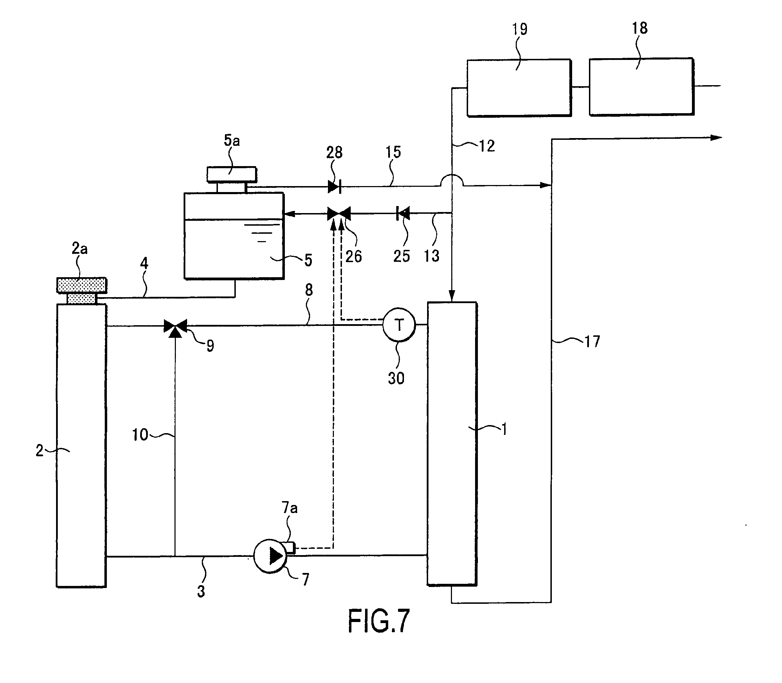

FIG. 7 is a block diagram showing the constitution of a fuel cell system according to a seventh embodiment of this invention. Apart from the points to be described below, the fuel cell system according to the seventh embodiment is identical to the fuel cell system according to the sixth embodiment, and identical reference symbols have been allocated to identical constitutional elements.

In this embodiment, a temperature sensor 30 that detects the temperature of the cooling water flowing through the cooling water return pipe 8 is provided in the cooling water return pipe 8 in the vicinity of the fuel cell 1 in place of the pressure sensor 27 so that the timing at which the pressurizing cap 2a opens and the cooling water and fuel gas flow into the reservoir tank 5 can be predicted. Further, pump rotation speed detecting means 7a for detecting a rotation speed of the pump 7 are provided in the pump 7.

When the temperature of the cooling water flowing through the cooling water return pipe 8 reaches or exceeds a predetermined value or the rotation speed of the pump 7 reaches or exceeds a predetermined value, the open/close valve 26 opens on the assumption that the pressurizing cap 2a is open, allowing cooling water and fuel gas to flow into the reservoir tank 5. Hence, fuel gas leakage can be prevented even when a user of the fuel cell system opens the cap 5a of the reservoir tank 5, for example.

The temperature of the cooling water flowing through the cooling water return pipe 8 and the rotation speed of the pump 7 when the open/close valve 26 opens may be determined by creating, through experiment or the like, a map of the temperature of the cooling water flowing through the cooling water return pipe 8 and the rotation speed of the pump 7 when the pressurizing cap 2a opens.

All other effects are similar to those of the fuel cell system according to the sixth embodiment.

### (Eighth Embodiment)

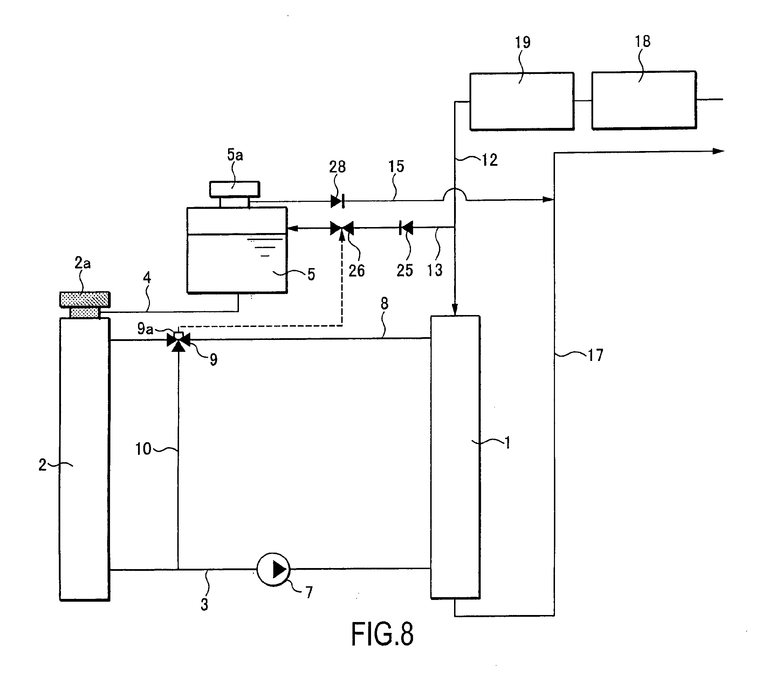

FIG. 8 is a block diagram showing the constitution of a fuel cell system according to an eighth embodiment of this invention. Apart from the points to be described below, the fuel cell system according to the eighth embodiment is identical to the fuel cell system according to the sixth embodiment, and identical reference symbols have been allocated to identical constitutional elements.

In this embodiment, opening detecting means 9a for detecting an opening of the three-way valve 9 are provided in place of the pressure sensor 27 to predict the timing at which the pressurizing cap 2a opens and the cooling water and fuel gas flow into the reservoir tank 5.

When the opening of the three-way valve 9 on the radiator 2 side reaches or exceeds a predetermined value, the open/close valve 26 opens on the assumption that the pressurizing cap 2a is open, allowing cooling water and fuel gas to flow into the reservoir tank 5. Hence, fuel gas leakage can be prevented even when the user or the like of the fuel cell system opens the cap 5a of the reservoir tank 5, for example.

The opening of the three-way valve 9 when the open/close valve 26 opens may be determined by creating, through experiment or the like, a map of the opening of the three-way valve 9 when the pressurizing cap 2a opens.

All other effects are similar to those of the fuel cell system according to the sixth embodiment.

### (Ninth Embodiment)

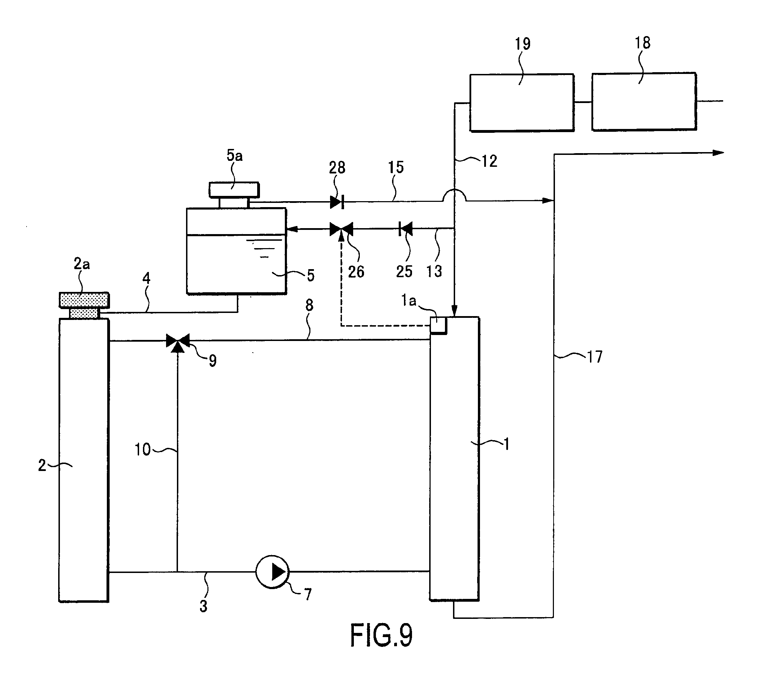

FIG. 9 is a block diagram showing the constitution of a fuel cell system according to a ninth embodiment of this invention. Apart from the points to be described below, the fuel cell system according to the ninth embodiment is identical to the fuel cell system according to the sixth embodiment, and identical reference symbols have been allocated to identical constitutional elements.

In this embodiment, the fuel gas that has accumulated in the reservoir tank 5 is diluted only before the fuel cell system is stopped and the cap 5a of the reservoir tank 5 or the like is opened for maintenance purposes and so on. Accordingly, fuel cell stoppage detecting means 1a for detecting whether or not the fuel cell 1 has been stopped are provided in place of the pressure sensor 27.

The open/close valve 26 opens when the fuel cell 1 is stopped. The diluted fuel gas is discharged from the reservoir tank 5 through the diluted gas exhaust pipe 15, diluted further with unused air flowing through the exhaust pipe 17 after being discharged from the fuel cell 1, and then discharged to the exterior of the fuel cell system. Hence, fuel gas leakage can be prevented even when the user or the like of the fuel cell system opens the cap 5a of the reservoir tank 5, for example.

All other effects are similar to those of the fuel cell system according to the sixth embodiment.

### (Tenth Embodiment)

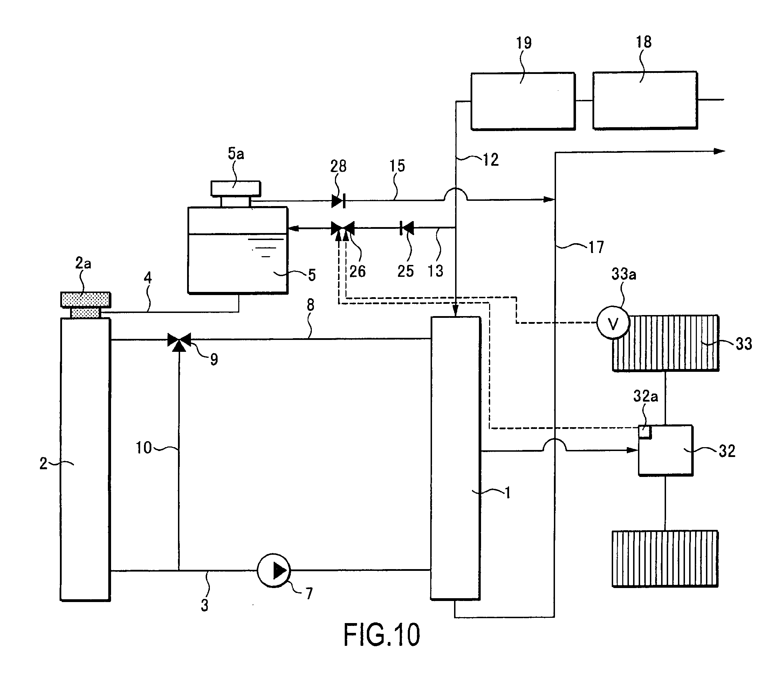

FIG. 10 is a block diagram showing the constitution of a fuel cell system according to a tenth embodiment of this invention. Apart from the points to be described below, the fuel cell system according to the tenth embodiment is identical to the fuel cell system according to the sixth embodiment, and identical reference symbols have been allocated to identical constitutional elements.

In this embodiment, the fuel cell system is installed in a fuel cell automobile, and the fuel gas that accumulates in the reservoir tank 5 is diluted only before the vehicle and the fuel cell system are stopped and the cap 5a of the reservoir tank 5 or the like is opened for maintenance purposes and so on. Therefore, the fuel cell system according to this embodiment comprises, in place of the pressure sensor 27, a motor 32 that is driven by a supply of power generated by the fuel cell 1, motor rotation speed detecting means 32a for detecting a rotation speed of the motor 32, a wheel 33 that is driven by the motor 32, and wheel rotation speed detecting means 33a for detecting a rotation speed of the wheel 33.

The open/close valve 26 opens when the rotation speed of the motor 32 falls to or below a predetermined value or when the rotation speed of the wheel 33 falls to or below a predetermined value. The rotation speed of the motor 32 and the rotation speed of the wheel 33 when the open/close valve 26 opens are preferably set at values close to zero immediately before the fuel cell automobile stops. The diluted fuel gas is discharged from the reservoir tank 5 through the diluted gas exhaust pipe 15, diluted further with unused air flowing through the exhaust pipe 17 after being discharged from the fuel cell 1, and then discharged to the exterior of the fuel cell automobile. Hence, fuel gas leakage can be prevented even when the user or the like of the fuel cell automobile opens the cap 5a of the reservoir tank 5, for example.

All other effects are similar to those of the fuel cell system according to the sixth embodiment.

### (Eleventh Embodiment)

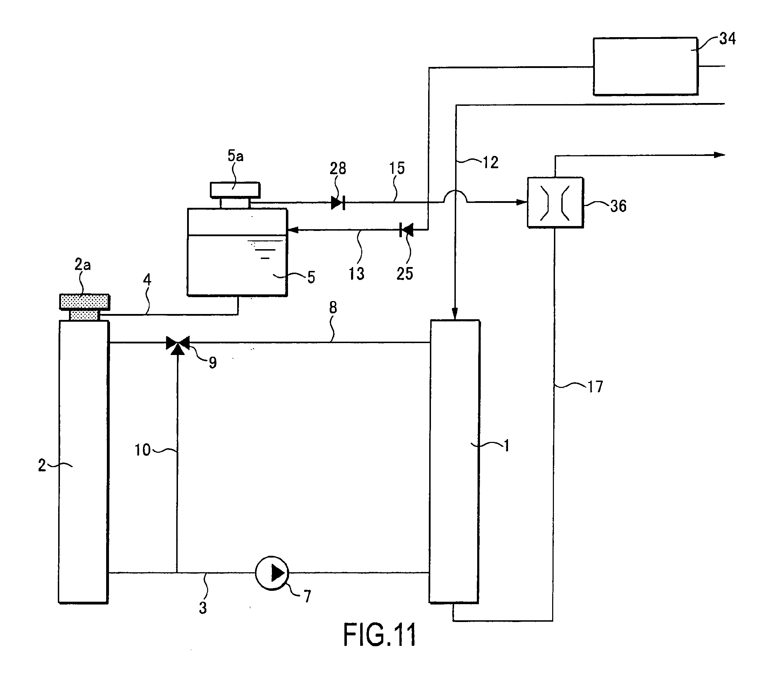

FIG. 11 is a block diagram showing the constitution of a fuel cell system according to an eleventh embodiment of this invention. Apart from the points to be described below, the fuel cell system according to the eleventh embodiment is identical to the fuel cell system according to the sixth embodiment, and identical reference symbols have been allocated to identical constitutional elements.

In this embodiment, the fuel cell system is installed in a fuel cell automobile, and the fuel gas that accumulates in the reservoir tank 5 is diluted continuously, similarly to the first embodiment. Hence, the open/close valve 26 is not provided in the fuel cell system according to this embodiment. Further, the oxidant gas supply pipe 12 and the air supply pipe 13 are provided separately, the air filter 18 and the intake air compressor 19 are not provided in the oxidant gas supply pipe 12, and instead, a foreign matter removal filter 34 is provided in the air supply pipe 13 on the upstream side of the reservoir tank 5.

Moreover, the fuel cell system according to this embodiment comprises a venturi 36 provided in the exhaust pipe 17 and connected to the diluted gas exhaust pipe 15. In this embodiment, the air supply pipe 13 opens onto a motor room or the like of the fuel cell automobile, and the venturi 36 uses the flow of air passing through the exhaust pipe 17 to generate negative pressure. As a result, air circulation through the oxidant gas supply pipe 12 and the diluted gas exhaust pipe 15 is promoted without consuming power.

It should be noted that in the fuel cell systems of the first to tenth embodiments, a venturi may be provided in the exhaust pipe 17 or the like and connected to the diluted gas exhaust pipe 15 to reduce the power consumption of the intake air compressor 19.

All other effects are similar to those of the fuel cell system according to the sixth embodiment.

This invention is not limited to the embodiments described above, and may of course be subjected to various modifications and improvements within the technical scope thereof. For example, fuel cell systems having various structures may be created by combining the fuel cell systems of the first to eleventh embodiments.

### INDUSTRIAL APPLICABILITY

In this invention, the fuel cell system is installed in a fuel cell automobile, but the fuel cell system according to this invention may be used for other purposes.

## Claims

1. A fuel cell system comprising:
a fuel cell (1) that performs power generation by causing a fuel gas and an oxidant gas in air to react;
a heat exchanger (2) that supplies a cooling water to the fuel cell (1) via a cooling water supply pipe (3);
a pump (7) provided in the cooling water supply pipe (3);
a cooling water return pipe (8) for returning the cooling water to the heat exchanger (2) from the fuel cell (1);
a pressurizing valve (2a) provided on a circulation path of the cooling water;
a reservoir tank (5) into which the cooling water flows through a pipe (4) when the pressurizing valve (2a) is open;
an air supply pipe (13) that is connected to the reservoir tank (5) to supply air for diluting the fuel gas when the fuel gas accumulates in the reservoir tank (5); and
a diluted gas exhaust pipe (15) for discharging the diluted fuel gas from the reservoir tank (5).

2. The fuel cell system as defined in Claim 1, wherein the air supply pipe (13) is a branch pipe that bifurcates from an oxidant gas supply pipe (12) for supplying the oxidant gas to the fuel cell (1).

3. The fuel cell system as defined in Claim 1, further comprising:
a fuel cell case (1a) that houses the fuel cell (1); and
a ventilation gas supply pipe (20) for supplying a ventilation gas to the fuel cell case (1a),
wherein the air supply pipe (13) is a branch pipe that bifurcates from the ventilation gas supply pipe (20).

4. The fuel cell system as defined in Claim 1, wherein an end portion of the air supply pipe (13) other than an end portion connected to the reservoir tank (5) opens onto the atmosphere.

5. The fuel cell system as defined in any one of Claim 1 to Claim 4, wherein the diluted gas exhaust pipe (15) is connected to the oxidant gas supply pipe (12) for supplying the oxidant gas to the fuel cell (1).

6. The fuel cell system as defined in any one of Claim 1, Claim 2 and Claim 4, further comprising:
a fuel cell case (1a) that houses the fuel cell (1); and
a ventilation gas supply pipe (20) for supplying a ventilation gas to the fuel cell case (1a),
wherein the diluted gas exhaust pipe (15) is connected to the ventilation gas supply pipe (20).

7. The fuel cell system as defined in Claim 3, wherein the diluted gas exhaust pipe (15) is connected to the ventilation gas supply pipe (20).

8. The fuel cell system as defined in any one of Claim 1 to Claim 4,
wherein the diluted gas exhaust pipe (15) is connected to an exhaust pipe (17) for discharging a gas discharged from the fuel cell (1) to the outside.

9. The fuel cell system as defined in any one of Claim 1, Claim 2 and Claim 4, further comprising:
a fuel cell case (1a) that houses the fuel cell (1); and
a ventilation gas supply pipe (20) for supplying a ventilation gas to the fuel cell case (1a); and
a ventilation gas exhaust pipe (23) for discharging the ventilation gas from the fuel cell case (1a),
wherein the diluted gas exhaust pipe (15) is connected to the ventilation gas exhaust pipe (23).

10. The fuel cell system as defined in Claim 3, further comprising a ventilation gas exhaust pipe (23) for discharging the ventilation gas from the fuel cell case (1a), wherein the diluted gas exhaust pipe (15) is connected to the ventilation gas exhaust pipe (23).

11. The fuel cell system as defined in any one of Claim 1 to Claim 3, wherein one end portion of the diluted gas exhaust pipe (15) is connected to the reservoir tank (5), and another end portion opens onto the atmosphere.

12. The fuel cell system as defined in any one of Claim 1 to Claim 3 and Claims 7, 10 and 11, wherein the air supply pipe (13) is connected to the reservoir tank (5) above the diluted gas exhaust pipe (15).

13. The fuel cell system as defined in Claim 4, wherein the diluted gas exhaust pipe (15) is connected to the reservoir tank (5) above the air supply pipe (13).

14. The fuel cell system as defined in any one of Claim 1 to Claim 3 and Claims 7, 10 and 11, wherein a check valve (25) is provided in the air supply pipe (13), and the air supply pipe (13) is connected to the reservoir tank (5) below the diluted gas exhaust pipe (15).

15. The fuel cell system as defined in any one of Claim 1 to Claim 10, wherein a check valve (28) is provided in the diluted gas exhaust pipe (15).

16. The fuel cell system as defined in any one of Claim 1 to Claim 15, wherein a foreign matter removal filter (34) is provided in the air supply pipe (13) on an upstream side of the reservoir tank (5).

17. The fuel cell system as defined in any one of Claim 1 to Claim 16, wherein an intake air compressor (19) that supplies the oxidant gas to the fuel cell (1) is provided in the oxidant gas supply pipe (13) for supplying the oxidant gas to the fuel cell (1).

18. The fuel cell system as defined in any one of Claims 3, 6, 7, 9 and 10, wherein a ventilation blower (22) that supplies the ventilation gas to the fuel cell case (1a) is provided in the ventilation gas supply pipe (20).

19. The fuel cell system as defined in Claim 17 or Claim 18, wherein an open/close valve (26) is provided in the air supply pipe (13).

20. The fuel cell system as defined in Claim 19, wherein a pressure sensor (27) that detects an internal pressure of the cooling water supply pipe (3) or an internal pressure of the cooling water return pipe (8) is provided in the cooling water supply pipe (3) or the cooling water return pipe (8), and the open/close valve (26) is opened when the internal pressure of the cooling water supply pipe (3) or the internal pressure of the cooling water return pipe (8) reaches or exceeds a predetermined value.

21. The fuel cell system as defined in Claim 19, wherein a temperature sensor (30) that detects a temperature of the cooling water flowing through the cooling water return pipe (8) is provided in the cooling water return pipe (8), and the open/close valve (26) is opened when the temperature of the cooling water flowing through the cooling water return pipe (8) reaches or exceeds a predetermined value.

22. The fuel cell system as defined in Claim 19, further comprising pump rotation speed detecting means (7a) for detecting a rotation speed of the pump (7), wherein the open/close valve (26) is opened when the rotation speed of the pump (7) reaches or exceeds a predetermined value.

23. The fuel cell system as defined in Claim 19, wherein a three-way valve (9) that sends the cooling water to the cooling water supply pipe (3) or the heat exchanger (2) is provided in the cooling water return pipe (8),
the fuel cell system further comprises opening detecting means (9a) for detecting an opening of the three-way valve (9), and
the open/close valve (26) is opened when the opening of the three-way valve (9) reaches or exceeds a predetermined value.

24. The fuel cell system as defined in Claim 19, further comprising fuel cell stoppage detecting means (1a) for detecting whether or not the fuel cell (1) has stopped, wherein the open/close valve (26) is opened when the fuel cell (1) has stopped.

25. The fuel cell system as defined in Claim 19, further comprising:
a motor (32) that is driven by a supply of power generated by the fuel cell (1); and
motor rotation speed detecting means (32a) for detecting a rotation speed of the motor (32),
wherein the open/close valve (26) is opened when the rotation speed of the motor (32) falls to or below a predetermined value.

26. The fuel cell system as defined in Claim 25, further comprising:
a wheel (33) that is driven by the motor (32); and
wheel rotation speed detecting means (33a) for detecting a rotation speed of the wheel (33),
wherein the open/close valve (26) is opened when the rotation speed of the wheel (33) falls to or below a predetermined value.

27. The fuel cell system as defined in any one of Claim 1 to Claim 4, further comprising a venturi (36) that is provided in the exhaust pipe (17) and connected to the diluted gas exhaust pipe (15).
